# FASCICULE DE BREVET EUROPEEN

(11) **EP 0 797 118 B1**
(45) Date de publication et mention de la délivrance du brevet: **22.12.1999**
(21) Numéro de dépôt: 97420033.9
(22) Date de dépôt: 28.02.1997
(51) Int. Cl.: G03B 21/62, G03B 21/10

(54) **Cinéma translucide en image totale**
Durchlichtprojektion des Gesamtbildbereichs
Total image rear projection

(30) Priorité: 22.03.1996 FR 9603840
(43) Date de publication de la demande: 24.09.1997
(73) Titulaire: Raffin, Michel, 69500 Bron (FR)
(72) Inventeur: Raffin, Michel, 69500 Bron (FR)

(56) Documents cités:
- FR-A- 417 857
- FR-A- 603 558
- US-A- 4 139 283
- US-A- 4 921 330

## Description

La présente invention concerne un dispositif de projection cinématographique sur écran translucide qui élimine le "bord image" constitué par le cadre de l'écran. De par l'effet de profondeur que procure la projection translucide et la disparition du phénomène de "bord image", le spectateur assiste de façon virtuelle au déroulement du film, il ne voit en fait plus d'écran. D'autre part, une fois la toile d'écran enlevée, ce cinéma peut être utilisé comme théâtre, chose impossible dans les salles de cinéma traditionnelles.

La projection sur écran translucide existe déjà, comme le démontrent, par exemple, les brevets U.S. n°4 921 330 ou n° 4 139 283, mais aucun de ces procédés ne suppriment le "bord image", ce qui est la caractéristique essentielle de l'invention, qui concerne le système de projection défini dans la revendication 1, ainsi que par les modes définis dans les revendications 2 à 6.

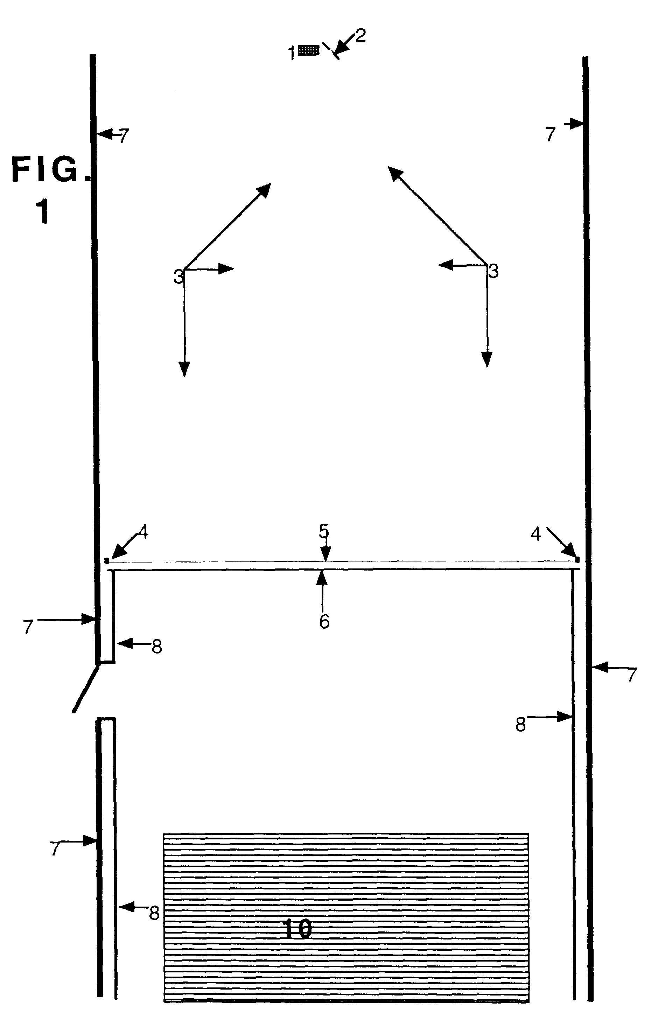

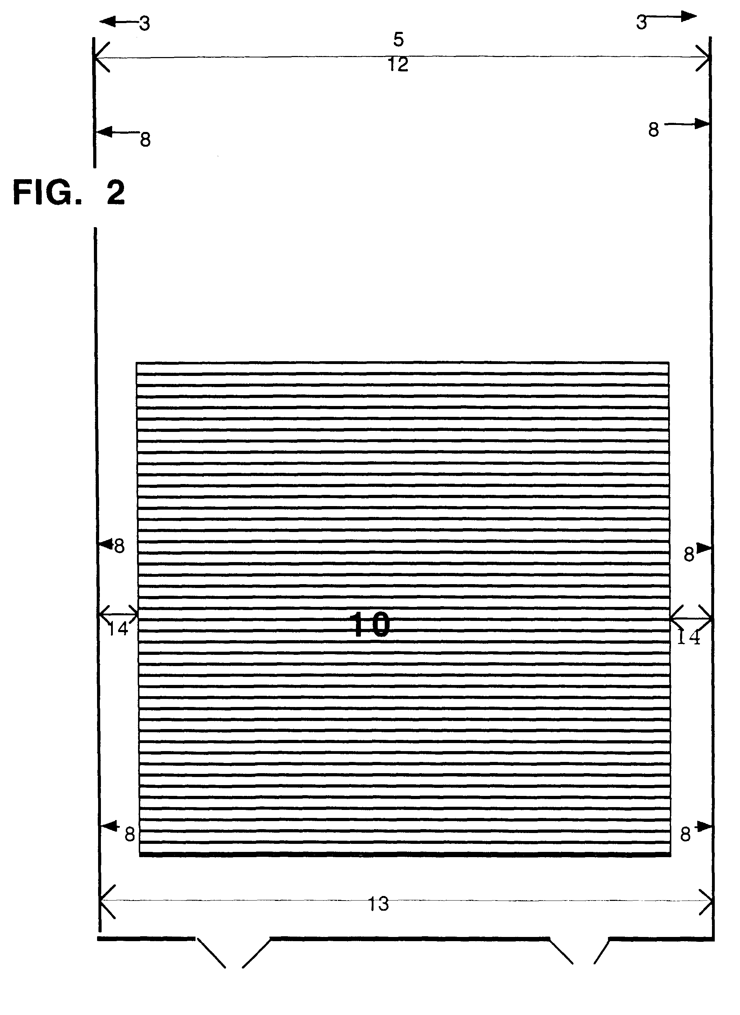

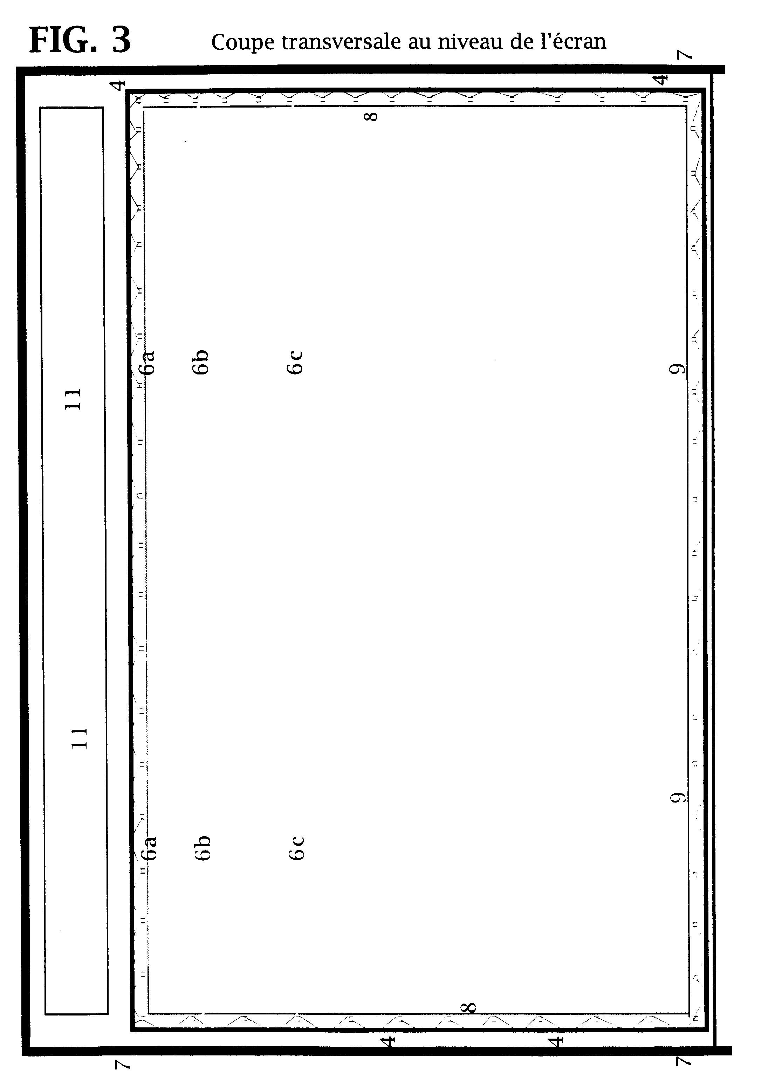

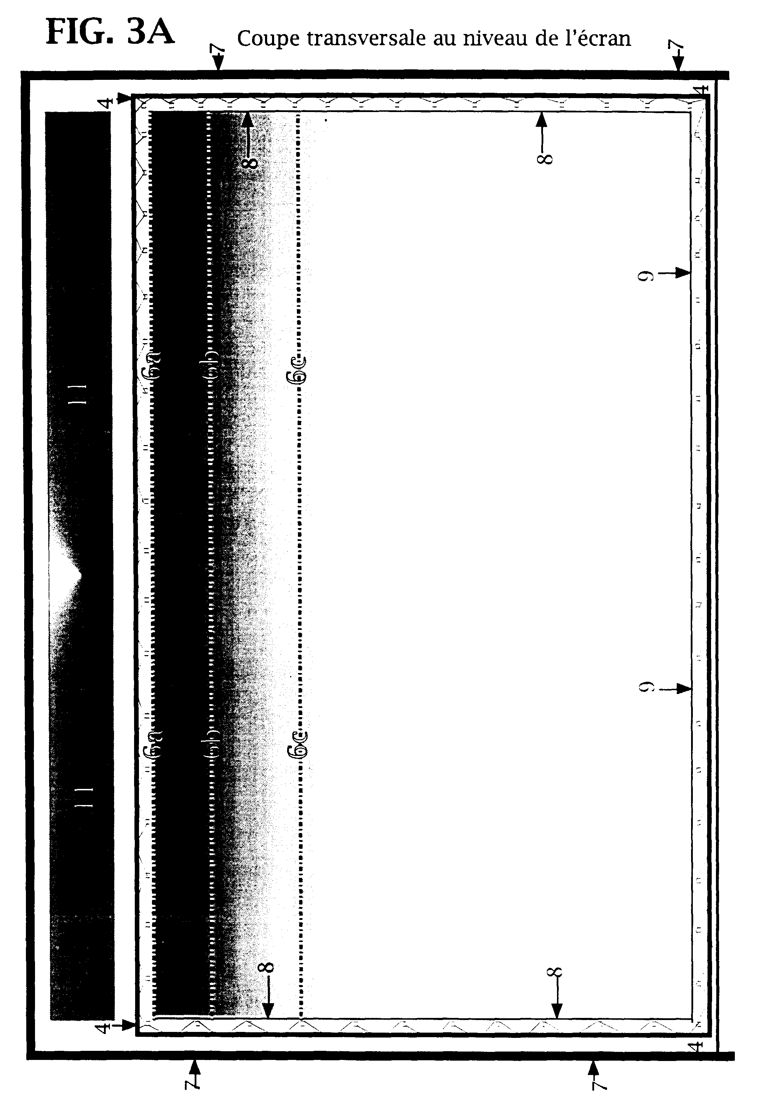

Pour projeter un film sur écran translucide il faut tout d'abord le projeter à l'envers (dans le sens droite-gauche). Pour ce faire, on place un miroir (2 fig1) traité sur sa partie supérieure, à 45° par rapport au projecteur (1 fig1). Le miroir "retourne" l'image et l'envoie contre l'écran (5 fig 1&2). Le principe de l'Image Totale est obtenue par un système de doubles cloisons (7 & 8 figl). Le cadre de l'écran (4 figl & 3) est à l'intérieur de cette double cloison (7 & 8 fig 3) ainsi que du faux plancher (9 fig 3). Pour supprimer la zone de non-netteté en bordure de l'image, on projette (3 fig 1&2) très légèrement au-delà des cloisons. Ce sont donc les cloisons intérieures (8 fig 3) et le faux plancher (9 fig 3) qui délimitent l'image.

Quel que soit le format 35 mm utilisé, on projette toujours de cloison à cloison et à hauteur du plancher. On "cadre" suivant les formats en baissant une toile noire anti-feu (6 fig 1) devant l'écran. On peut voir sur la figure 3 les différentes hauteurs d'images suivant le format du film utilisé :
6a correspond au rapport largeur/hauteur = 1,66
6b correspond au rapport largeur/hauteur = 1,85
6c correspond au cinémascope.

Même si d'un point de vue architectural on peut concevoir le même type de salle avec un écran blanc, la suppression du phénomène de "bord image" sera techniquement impossible. Pour que chaque spectateur puisse voir l'image au niveau du plancher, les rangées de fauteuils (10 fig 1&2) doivent être installées sur une pente assez forte. Le projecteur devrait donc se situer plus haut que le haut de l'écran.

Dans cette configuration, la distorsion géométrique verticale des images est telle que, si on projetait sur toute la largeur de l'écran en haut, en bas on projetterait sur les cloisons. D'autre part, en projection frontale on est obligé de projeter les bords du cache de l'appareil de projection (zone de non-netteté avec souvent un fort vignetage). En revanche, le fait de délimiter l'image à l'aide de cloisons parfaitement rectilignes va donner l'impression au spectateur qu'il n'y a plus d'écran. Il n'est pas possible en translucide d'utiliser de toile transonore.

Le système de diffusion du son se situera au-dessus de l'écran (11 fig 3) et si possible également en-dessous de l'écran.

Pour que le système d'Image Totale soit efficace, il est impératif de satisfaire aux exigences suivantes :
- la toile translucide doit être très fine (2 à 3/10è de mm) et sans texture. Il semble n'exister qu'un seul type de toile remplissant ces conditions ; les autres sont de qualité insuffisante, d'autre part leur épaisseur et leur opacité rendent les soudures visibles (bandes plus sombres).
- l'éclairement d'un écran translucide est directif. En se reportant à la figure 2, il convient d'observer que la distance -12- doit être égale ou supérieure à la distance -13-. Le fauteuil le plus à droite ou le plus à gauche doit se trouver à 90 cm minimum de la cloison. Dans le cas d'écrans inférieurs à 9 m de base, la distance -14-devra être égale à 1/10ème de la distance -12-.

La toile étant fixée au cadre par un système de tendeurs (fig 3) lui assurant une parfaite planéité, il est possible de l'enlever.

La salle de cinéma devient alors un théâtre, d'une part grace à la scène très profonde et d'autre part à la visibilité dès le niveau du plancher de scène. Toutefois il s'agit ici d'une utilisation accessoire.

Cette utilisation polyvalente, alliée à un système de projection très performant et au moindre coût du foncier bâti, devrait beaucoup intéresser les petites villes ou celles situées en périphérie de grandes agglomérations.

## Revendications

1. Un système de projection pour une salle cinématographique, le système comprenant un dispositif de projection comportant un écran translucide (5) avec une première et une deuxième face et un projecteur d'images (1) pour projeter une image sur la première face de l'écran translucide, l'image ainsi projetée étant observable sur la deuxième face de l'écran translucide, caractérisé en ce que le système comprend une cloison droite (8), une cloison gauche (8) et un faux plancher (9) disposés du côté de l'écran correspondant à la deuxième face de l'écran, de manière à recouvrir respectivement le côté droit, le côté gauche et le côté inférieur du périmètre de l'écran ; l'image projetée se trouvant ainsi démunie de tout cadre, aussi bien le cadre de l'écran (4) qui se trouve inséré à l'intérieur des cloisons et du faux plancher, que le cadre de la fenêtre de projection qui sera projeté en dehors des limites de la périphérie de l'image vue par les spectateurs (3).

2. Système de projection selon la revendication 1, comprenant une toile noire disposée devant l'écran (6) et apte à être positionnée à différentes hauteurs (6a, 6b, 6c) afin de cadrer l'image projetée suivant le format de l'image, les autres limites de l'image restant celles énoncées à la revendication 1.

3. Système de projection selon la revendication 1, caractérisé en ce que chaque cloison droite et gauche est constituée par la cloison intérieure d'une double cloison (7,8)

4. Système de projection selon la revendication 1, caractérisée en ce que l'écran est disposé dans un rétrécissement de la cloison droite et de la cloison gauche.

5. Utilisation du système de projection de la revendication 1 pour la projection cinématographique de 35 ou 70 mm, pour le Showscann ou pour le système Imax.

6. Utilisation du système de projection de la revendication 1 pour la projection de diapositives.

## Patentansprüche

1. Ein Projektionsystem für ein Filmtheater, dieses System enthält eine Projektionseinrichtung, die aus einer lichtdurchlässigen Leinwand mit eine Vorder-und-Hinterseite und aus einem Projektor, der ein Bild auf die Vorderseite der lichtdurchlässigen Leinwand projektiert, besteht (5) ; man kann das so projektierte Bild auf die Hinterseite der lichtdurchlässigen Leinwand beobachten. Typisches Merkmal dieses Patentes ist der Bau einer rechten Wand (8), einer linken Wand (8) und eines oberen Fussbodens auf der Hinterseite der Leinwand um folgendes die rechte Seite, die linke Seite und die untere Seite des Leinwandumfanges zu decken ; das projektierte Bild wird also ein Bild ohne Rand, genauso das innerhalb der Wände und des oberen Fussbodens stehende Leinwandrand (4), wie das Rand des Fenstersrahmens des Projektionsapparates, das ausser die Umkreisgrenzen des zugeschaute Bildes projektiert wird (3).

2. Projektionsystem -gemäss der Forderung 1-, einschliessend : ein vor der Leinwand angehängter schwarzer Stoff (6) und, der auf verschiedenen Höhen eingestellt werden kann (6a, 6b, 6c), um das projektierte Bild je nach Bildformat zu zentrieren ; für die anderen Bildgrenzen (untere & seitlichen) siehe Forderung 1.

3. Projektionsystem -gemäss der Forderung 1-, gekennzeichnet durch : jede Wand -links und rechts- ist selbst die innere Wand von Zwischenwänden (7,8).

4. Projektionsystem -gemäss der Forderung 1-, gekennzeichnet durch : die Leinwand wird innerhalb einer Verengung der rechten und linken Wand gestellt.

5. Verwendung des Projektionsystems -gemäss der Froderung 1- für 35 mm-, 70 mm-, Showscann- und Imaxsystemsfilmvorführung.

6. Verwendung des Projektionsystems -gemäss der Forderung 1- für Diavorführung.

## Claims

1. A projection system for a cinema, this system includes a projection device made up of a translucent screen (5) with a first and a second side and of a projector of pictures (1) to project a picture on the first side of the translucent screen, the projected picture can be seen on the second side of the tanslucent screen, the main feature of this system is the layout of a right wall (8), a left wall and a false floor (9) on the second side of the screen, in order to hide -from spectators'eyes- the right, left and bottom edges of the screen frame ; the projected picture is -in that way- without any frame, as well the frame of the screen (4) which is situated inside the walls and the false floor, as the edges of the projector frame which are projected out of the limits of the screen area seen by the spectators (3).

2. Projection system according feature 1), including a black curtain which can be rolled at differents heights (6a, 6b, 6c), suspended in front of the screen (6), in order to frame by the top the projected picture according to the film format, the other limits of the picture are still the same as those set out in paragraph 1).

3. Projection system according feature 1), characterized in the way that each wall, right and left one, is made up by the inside wall of a double wall (7,8).

4. Projection system according feature 1), characterized in the way that the screen stands within a narrowing of the right wall and the left wall.

5. Use of the projection system according feature 1) for the projection of 35 mm-, 70 mm films, for Showscann or for Imax system.

6. Use of the projection system according feature 1) for the projection of slides.
